# EUROPÄISCHE PATENTANMELDUNG

(11) **EP 4 335 784 A1**
(43) Veröffentlichungstag der Anmeldung: **13.03.2024**
(21) Anmeldenummer: 23195080.9
(22) Anmeldetag: 04.09.2023
(51) Int. Cl.: B65G 1/04, B65G 47/90, B65G 47/84, B67B 3/20, B67C 3/24

(54) **KLAMMERVORRICHTUNG**

(30) Priorität: 09.09.2022 DE 202022105105 U
(71) Anmelder: KRONES AG, 93073 Neutraubling (DE)
(72) Erfinder: SCHOENFELDER, Markus, 93073 Neutraubling (DE)
(74) Vertreter: v. Bezold & Partner Patentanwälte - PartG mbB

(57) **Zusammenfassung**

Die Erfindung betrifft eine Klammervorrichtung (10) zum Halten von Behältern (B) für eine Behältertransport- und/oder Behälterbehandlungsvorrichtung. Die Klammervorrichtung (10) weist einen Klammerarm (12) zum Halten eines Behälters (B), eine Welle (16), die zum Schwenken des Klammerarms (12) mit dem Klammerarm (12) verbunden ist, und ein Montageelement (20) zum Montieren der Klammervorrichtung (10) auf. Das Montageelement (20) weist eine Wellendurchführung (42) auf, durch die sich die Welle (16) erstreckt. Die Klammervorrichtung (10) weist ferner ein Dichtelement (22) auf, das koaxial zu der Welle (16) angeordnet ist und zwischen der Welle (16) und dem Montageelement (20) abdichtet.

## Beschreibung

### Technisches Gebiet

Die Erfindung betrifft eine Klammervorrichtung. Die Erfindung betrifft ferner eine Behältertransport- und/oder Behälterbehandlungsvorrichtung mit mindestens einer Klammervorrichtung.

### Technischer Hintergrund

Die DE 10 2020 114 905 A1 betrifft eine Vorrichtung zum Halten eines Behälters in einer Behälterbehandlungsvorrichtung, umfassend zwei in einer Schwenkebene relativ zueinander schwenkbare Greifarme, welche jeweils einen Halteabschnitt zum Halten des zu haltenden Behälters aufweisen. Eine Hubstange ist derart mit den Greifarmen gekoppelt, dass durch ein Verschieben der Hubstange senkrecht zur Schwenkebene der Greifarme die Halteabschnitte relativ zueinander verschwenkbar sind. Die Greifarme sind jeweils um eine Schwenkachse, ausgebildet über eine mechanische Welle, schwenkbar an einer Halterung angeordnet.

Die Konstruktion der bekannten Vorrichtung zum Halten eines Behälters kann ungeeignet für die Isolatortechnik sein, bei der hygienische Teile im Reinraum sicher vom Grauraum zu trennen sind. Die Isolatortechnik wird genutzt, um die Sterilität des Reinraums zu gewährleisten und um im Grauraum Komponenten vor Reinigungsmedien und Sterilisationsmedien zu schützen. Bei der bekannten Vorrichtung zum Halten eines Behälters besteht jedoch konstruktionsbedingt ein Risiko dafür, dass Fluide oder Partikel aus einem Raum oberhalb der Halterung in den Raum unterhalb der Halterung gelangen und umgekehrt.

Der Erfindung liegt die Aufgabe zu Grunde, eine in Bezug auf eine hygienische Konstruktion verbesserte Klammervorrichtung zu schaffen, die vorzugsweise eine Reinraum- bzw. Isolatoranwendung erlaubt. Bevorzugt soll die aus der DE 10 2020 114 905 A1 bekannte Vorrichtung zum Halten eines Behälters in Bezug auf eine hygienische Konstruktion verbessert werden, sodass vorzugsweise die oben genannten Nachteile überwunden werden können.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft eine Klammervorrichtung, vorzugsweise eine Neckhandling-Klammervorrichtung, zum Halten von Behältern für eine Behältertransport- und/oder Behälterbehandlungsvorrichtung. Die Klammervorrichtung weist einen Klammerarm zum Halten eines Behälters auf. Die Klammervorrichtung weist eine Welle, die zum Schwenken des Klammerarms mit dem Klammerarm verbunden ist, auf. Die Klammervorrichtung weist ein, vorzugsweise im Wesentlichen plattenförmiges, Montageelement zum Montieren der Klammervorrichtung auf, wobei das Montageelement eine Wellendurchführung aufweist, durch die sich die Welle erstreckt. Die Klammervorrichtung weist ein Dichtelement, das koaxial zu der Welle angeordnet ist und zwischen der Welle und dem Montageelement abdichtet, auf.

Vorteilhaft ermöglicht das Dichtelement eine kostengünstige und einfache, hermetische Abdichtung, sodass die Klammervorrichtung auch für die Isolatortechnik eingesetzt werden kann. Ein Übergang von Fluiden oder Partikeln von einer Seite des Montageelements zu der anderen Seite des Montageelements und umgekehrt kann wirksam durch das Dichtelement verhindert werden. Damit ergibt sich vorteilhaft eine kostengünstige Möglichkeit der Abdichtung, insbesondere im vorliegenden Anwendungsfall mit zyklischer Hin- und Herdrehbewegung der Welle bzw. zyklischer Hinund Herschwenkbewegung des Klammerarms.

In einem Ausführungsbeispiel ist das Dichtelement schlauchförmig. Im Gegensatz zu anderen Dichtsystemen kann bei einer solchen Ausführung mit einer vergleichsweise langen Standzeit des Dichtelements gerechnet werden. Die zyklischen Bewegungen könnten zwar bspw. auch durch einen Radialwellendichtring abgedichtet werden, jedoch sind hierbei Standzeitprobleme zu erwarten. Eine Dichtung via Magnet wäre zwar ebenfalls möglich, aber auch sehr teuer und zudem kann es problematisch sein, die benötigte Prozesskraft zu halten und definierte Bedingungen zu realisieren. Vorteilhaft kann die Schlauchform zudem in vielen unterschiedlichen Anwendungsfällen eingesetzt werden, da die Größe der Schlauchform von klein bis sehr groß variiert werden kann.

In einem weiteren Ausführungsbeispiel weist das Dichtelement ein erstes (z. B. stirnseitiges und/oder oberes) Ende und zweites (z. B. stirnseitiges und/oder unteres) Ende, das dem ersten Ende entgegengesetzt ist, auf. Das erste Ende ist drehfest mit dem Montageelement und/oder der Wellendurchführung verbunden. Alternativ oder zusätzlich ist das zweite Ende drehfest mit der Welle und/oder dem Klammerarm verbunden. Vorteilhaft kann mit einer solchen Ausführung die zyklische Hin- und Herdrehbewegung der Welle bzw. die zyklische Hin- und Herschwenkbewegung des Klammerarms sowie kleine Axialhübe der Welle sicher und mit einer langen Standzeit abgedichtet werden.

In einem weiteren Ausführungsbeispiel ist das Dichtelement einerseits an das Montageelement und/oder die Wellendurchführung und andererseits an die Welle und/oder den Klammerarm geklemmt. Vorteilhaft kann auch diese Ausführung die zyklische Hin- und Herdrehbewegung der Welle bzw. die zyklische Hin- und Herschwenkbewegung des Klammerarms sowie kleine Axialhübe der Welle sicher und mit einer langen Standzeit abdichten.

In einem weiteren Ausführungsbeispiel weist das Dichtelement einen, vorzugsweise radial nach innen gerichteten, Kragenabschnitt auf, der zwischen der Wellendurchführung und einem Durchgangsloch des Montageelements eingeklemmt ist. Alternativ oder zusätzlich weist das Dichtelement einen (z. B. weiteren), vorzugsweise radial nach innen gerichteten, Kragenabschnitt auf, der zwischen dem Klammerarm und der Welle eingeklemmt ist. Vorteilhaft kann diese Ausführung die zyklische Hin- und Herdrehbewegung der Welle bzw. die zyklische Hin- und Herschwenkbewegung des Klammerarms sowie kleine Axialhübe der Welle besonders sicher und mit einer besonders langen Standzeit abdichten.

In einer Ausführungsform ist das Dichtelement elastisch verformbar, vorzugsweise in sich verdrehbar und/oder axial dehnbar. Alternativ oder zusätzlich kann das Dichtelement als ein Torsionsbalg ausgeführt sein. Alternativ oder zusätzlich kann das Dichtelement aus einem Elastomer, Ethylen-Propylen-Dien-Kautschuk (EPDM), Silikon oder Fluorkautschuk (FKM) hergestellt sein. Vorteilhaft kann eine Elastizität des Materials des Dichtelements ermöglichen, dass das Dichtelement die Hinund Herdrehbewegungen der Welle bzw. das Hin- und Herschwenken des Klammerarms mitmachen kann und sich auch axial dehnen kann, um kleine Axialhübe abzudichten.

In einer weiteren Ausführungsform verdreht sich das Dichtelement bei einer Drehung der Welle (z. B. ausgehend von einer Nominaldrehstellung der Welle), vorzugsweise um 10°, 15° oder 20°, unter Beibehaltung einer Dichtwirkung zwischen dem Montageelement und der Welle in sich elastisch. Vorteilhaft kann damit sichergestellt werden, dass das Dichtelement über den gesamten Schwenkbewegungsbereich des Klammerarms, z. B. von offen zu geschlossen, sicher abdichtet.

In einer weiteren Ausführungsform ist das Montageelement als eine Platte, vorzugsweise eine Montageplatte, ausgeführt, vorzugsweise zur Überkopf-Montage an einen Träger der Behältertransport- und/oder Behälterbehandlungsvorrichtung, zum Beispiel mittels einer Schraubverbindung

In einer weiteren Ausführungsform ist die Wellendurchführung als ein Gleitlager oder eine Hülse ausgeführt.

Vorzugsweise kann das Montageelement zur Reinraumabtrennung ausgeführt sein, bevorzugt mit einem Grauraum oberhalb von dem Montageelement und einen Reinraum unterhalb von dem Montageelement.

In einer Ausführungsvariante weist die Klammervorrichtung ferner eine Betätigungseinrichtung zum Drehen der Welle zum Schwenken des Klammerarms auf, wobei die Betätigungseinrichtung auf einer dem Klammerarm entgegengesetzten Seite des Montageelements angeordnet ist. Alternativ oder zusätzlich kann die Klammervorrichtung eine Aufhängung zum Aufhängen der Klammervorrichtung aufweisen, wobei die Aufhängung auf einer dem Klammerarm entgegengesetzten Seite des Montageelements angeordnet ist. Vorteilhaft kann damit eine Verschmutzung eines Reinraums durch die Betätigungseinrichtung und/oder die Aufhängung wirksam verhindert werden.

In einer weiteren Ausführungsvariante weist die Klammervorrichtung ferner ein Befestigungselement, vorzugsweise eine Schraube, das den Klammerarm drehfest an der Welle befestigt, vorzugsweise durch Einschrauben in ein stirnseitiges Befestigungsloch der Welle, auf. Optional kann die Klammervorrichtung ferner eine Dichtung, vorzugsweise einen Dichtring, die zwischen dem Befestigungselement und dem Klammerarm abdichtet, aufweisen. Vorteilhaft kann auf diese Weise durch Lösen der Befestigungsschraube ein Zugang zum Grauraum geschaffen werden, um bspw. eine Sichtprüfung auf Verunreinigungen an der Welle usw. zu schaffen oder um ein Fluid aus dem Grauraum abzulassen.

In einem Ausführungsbeispiel weist der Klammerarm ein Verbindungselement, das drehfest an der Welle befestigt ist, und ein Halteelement, das an dem Verbindungselement befestigt ist, zum Kontaktieren des Behälters auf. Alternativ kann der Klammerarm beispielsweise einteilig sein.

In einem weiteren Ausführungsbeispiel weist die Klammervorrichtung ferner einen weiteren Klammerarm zum Halten des Behälters auf (z. B. gegenüberliegend zu dem Klammerarm angeordnet). Optional kann die Klammervorrichtung ferner eine weitere Welle, die zum Schwenken des weiteren Klammerarms mit dem weiteren Klammerarm verbunden ist, aufweisen. Das Montageelement kann bevorzugt eine weitere Wellendurchführung, durch die sich die weitere Welle erstreckt, aufweisen. Optional kann die Klammervorrichtung ferner ein weiteres Dichtelement aufweisen, das koaxial zu der weiteren Welle angeordnet ist und zwischen der weiteren Welle und dem Montageelement abdichtet. Vorteilhaft können damit die unter Bezugnahme auf das Dichtelement erläuterten Vorteile auch mit dem weiteren Dichtelement erzielt werden.

In einer Ausführungsform sind der weitere Klammerarm und der Klammerarm gegensinnig zueinander schwenkbar. Alternativ oder zusätzlich können die Welle und die weitere Welle parallel sein.

In einer weiteren Ausführungsform ist das weitere Dichtelement schlauchförmig. Alternativ oder zusätzlich weist das weitere Dichtelement ein erstes (z. B. stirnseitiges und/oder oberes) Ende und zweites (z. B. stirnseitiges und/oder unteres) Ende, das dem ersten Ende des weiteren Dichtelements entgegengesetzt ist, auf. Das erste Ende des weiteren Dichtelements kann drehfest mit dem Montageelement und/oder der weiteren Wellendurchführung verbunden sein. Das zweite Ende des weiteren Dichtelements kann drehfest mit der weiteren Welle und/oder dem weiteren Klammerarm verbunden sein. Alternativ oder zusätzlich ist das weitere Dichtelement einerseits an das Montageelement und/oder die weitere Wellendurchführung und andererseits an die weitere Welle und/oder den weiteren Klammerarm geklemmt. Alternativ oder zusätzlich weist das weitere Dichtelement einen, vorzugsweise radial nach innen gerichteten, Kragenabschnitt auf, der zwischen der weiteren Wellendurchführung und einem Durchgangsloch des Montageelements eingeklemmt ist. Alternativ oder zusätzlich weist das weitere Dichtelement einen (z. B. weiteren), vorzugsweise radial nach innen gerichteten, Kragenabschnitt auf, der zwischen dem weiteren Klammerarm und der weiteren Welle eingeklemmt ist. Alternativ oder zusätzlich ist das weitere Dichtelement elastisch verformbar, vorzugsweise in sich verdrehbar und/oder axial dehnbar. Alternativ oder zusätzlich ist das weitere Dichtelement als ein Torsionsbalg ausgeführt. Alternativ oder zusätzlich ist das weitere Dichtelement aus einem Elastomer, Ethylen-Propylen-Dien-Kautschuk (EPDM), Silikon oder Fluorkautschuk (FKM) hergestellt. Alternativ oder zusätzlich verdreht sich bei einer Drehung der weiteren Welle (z. B. ausgehend von einer Nominaldrehstellung der weiteren Welle), vorzugsweise um 10°, 15° oder 20°, das weitere Dichtelement unter Beibehaltung einer Dichtwirkung zwischen dem Montageelement und der weiteren Welle in sich elastisch. Vorteilhaft können damit die gleichen Vorteile erzielt werden, die bereits unter Bezugnahme auf das Dichtelement erläutert wurden.

Ein weiterer Aspekt der vorliegenden Offenbarung ist auf eine Behältertransport- und/oder Behälterbehandlungsvorrichtung, vorzugsweise Verschließvorrichtung zum Verschließen von Behältern, gerichtet. Die Behältertransport- und/oder Behälterbehandlungsvorrichtung weist mindestens eine Klammervorrichtung wie hierin offenbart auf. Vorteilhaft können damit die gleichen Vorteile erzielt werden, die bereits unter Bezugnahme auf die Klammervorrichtung erläutert wurden.

Vorzugsweise kann die Klammervorrichtung, die Behältertransportvorrichtung und/oder die Behälterbehandlungsvorrichtung in einer Behälterbehandlungsanlage zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel, umfasst sein.

Beispielsweise können die Behälter als Flaschen, Dosen, Kanister, Kartons, Flakons usw. ausgeführt sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht einer Klammervorrichtung gemäß einem Ausführungsbeispiel der vorliegenden Offenbarung; und
- Figur 2: eine Schnittansicht durch einen Abschnitt der beispielhaften Klammervorrichtung im Bereich eines Klammerarms der beispielhaften Klammervorrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

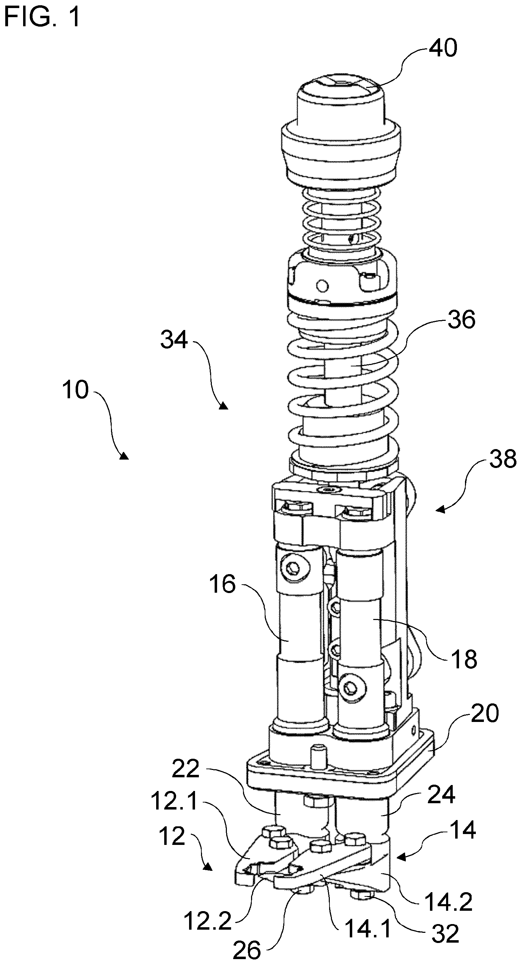

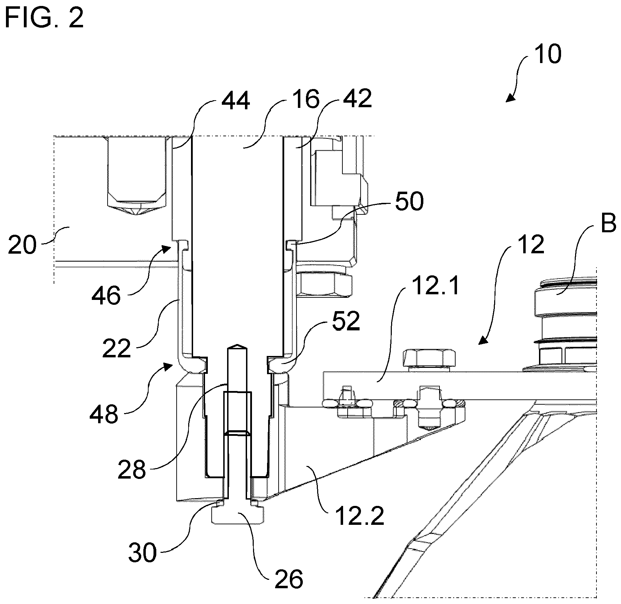

Die Figuren 1 und 2 zeigen eine Klammervorrichtung 10 bzw. einen Abschnitt davon. Die Klammervorrichtung 10 kann auch als Greifvorrichtung, vorzugsweise Seitengreifvorrichtung, bezeichnet werden. Die Klammervorrichtung 10 ist zum Halten eines Behälters B (nur in Figur 2 dargestellt) ausgebildet. Die Klammervorrichtung 10 ist bevorzugt als eine Neckhandling-Klammervorrichtung zum Halten des Behälters B im Bereich seines Halsrings ausgebildet, z. B. am Behälterhals über oder unter dem Halsring.

Die Klammervorrichtung 10 kann in einer Behältertransport- und/oder Behälterbehandlungsvorrichtung umfasst sein. Die Behältertransport- und/oder Behälterbehandlungsvorrichtung kann beispielsweise als eine Rundläufer-Vorrichtung bzw. in Karussellbauart oder als Linear-Vorrichtung ausgeführt sein.

Beispielsweise kann die Klammervorrichtung 10 wie die Vorrichtung zum Halten eines Behälters gemäß der DE 10 2020 114 905 A1 ausgeführt sein, die hierin durch Bezugnahme aufgenommen ist, insbesondere bezüglich der Konfiguration und der Anordnung der Vorrichtung zum Halten eines Behälters der DE 10 2020 114 905 A1.

Bevorzugt sind mehrere der Klammervorrichtungen 10 in einer Verschließvorrichtung zum Verschließen von Behältern B, z. B. mit einem Deckel, einem Korken, einem Kronkorken oder einem Schraubverschluss, umfasst. Die Verschließvorrichtung kann vorzugsweise als ein Verschließerkarussell ausgeführt sein. Die Verschließvorrichtung kann mehrere Verschließstationen zum gleichzeitigen Verschließen mehrerer Behälter B aufweisen. Jede Verschließstation kann eine Klammervorrichtung 10 aufweisen. Bspw. können die Verschließstationen bzw. die Klammervorrichtungen 10 um einen Umfang der als Verschließerkarussell ausgeführten Verschließvorrichtung angeordnet sein. Die Verschließvorrichtung kann bezüglich eines Behälterstroms stromabwärts von einer Füllvorrichtung zum Füllen der Behälter B mit einem bspw. flüssigen oder pastösen Füllgut angeordnet sein.

Die Klammervorrichtung 10 weist mindestens einen Klammerarm 12, 14, mindestens eine Welle 16, 18, ein Montageelement 20 und mindestens ein Dichtelement 22, 24 auf.

Die Klammerarme 12, 14 können den Behälter B gemeinsam zwischen sich halten. Bevorzugt sind beide Klammerarm 12, 14 gegensinnig zueinander schwenkbar. Es ist jedoch auch möglich, dass nur ein schwenkbarer Klammerarm 12 vorhanden ist, z. B. in Kombination mit einem feststehenden bzw. nicht-schwenkbaren Klammerarm (nicht in den Figuren 1 und 2 dargestellt). Die Klammerarme 12, 14 können auch als Greiferarme bezeichnet werden. Die Klammerarme 12, 14 können im Wesentlichen in einer Horizontalebene ausgerichtet sein.

Der Klammerarm 12 kann einteilig oder - wie in den Figuren 1 und 2 dargestellt ist - mehrteilig sein. Beispielsweise kann der Klammerarm 12 ein Halteelement 12.1 und ein Verbindungselement 12.2 aufweisen.

Mittels des Halteelements 12.1 kann der Behälter B kontaktiert und gehalten werden, bevorzugt im Halsbereich des Behälters B, z. B. über oder unter dem Halsring des Behälters B. Das Halteelement 12.1 kann an dem Verbindungselement 12.2 befestigt sein. Bevorzugt ist das Halteelement 12.1 mit dem Verbindungselement 12.2 verschraubt. Das Halteelement 12.1 kann auf einer Oberseite des Verbindungselements 12.2 aufliegen.

Das Verbindungselement 12.2 kann das Halteelement 12.1 mit der Welle 16 verbinden. Das Verbindungselement 12.2 kann das Halteelement 12.1 tragen. Das Verbindungselement 12.2 kann an der Welle 16 befestigt sein, z. B. von unten. Beispielsweise kann das Verbindungselement 12.2 mittels eines Befestigungselements 26 an der Welle 16 befestigt sein.

Bevorzugt ist das Befestigungselement 26 eine Schraube. Das Befestigungselement 26 kann sich durch ein Durchgangsloch des Verbindungselements 12.2 in ein (z. B. Sack- oder Durchgangs-) Befestigungsloch 28 der Welle 16 erstrecken. Vorzugsweise kann das Befestigungselement 26 in das Befestigungsloch 28 eingeschraubt sein. Das Befestigungsloch 28 kann sich bevorzugt in einer Stirnfläche bzw. Endfläche der Welle 16 öffnen. Das Befestigungsloch 28 kann sich bevorzugt entlang einer Längsachse der Welle 16 erstrecken.

Vorzugsweise kann zwischen dem Verbindungselement 12.2 und dem Befestigungselement 26 eine Dichtung 30, z. B. in Form eines Dichtrings, angeordnet sein. Die Dichtung 30 kann koaxial zum Befestigungselement 26 und/oder zum Durchgangsloch des Verbindungselements 12.2 angeordnet sein. Die Dichtung 30 kann zwischen dem Befestigungselement 26 und dem Verbindungselement 12.2 abdichten. Bevorzugt kann die Dichtung 30 zwischen dem Verbindungselement 12.2, vorzugsweise einer Unterseite davon, und einem Schraubenkopf des Befestigungselements 26 angeordnet sein. Bevorzugt ist die Dichtung als ein O-Ring ausgeführt.

Der (weitere) Klammerarm 14 kann wie der Klammerarm 12 ausgeführt sein. Beispielsweise kann der Klammerarm 14 einteilig oder - wie in Figur 1 dargestellt ist - mehrteilig sein. Beispielsweise kann der Klammerarm 14 ein Halteelement 14.1 und ein Verbindungselement 14.2 aufweisen.

Mittels des Halteelements 14.1 kann der Behälter B kontaktiert und gehalten werden, bevorzugt im Halsbereich des Behälters B, z. B. über oder unter dem Halsring des Behälters B. Der Behälter B kann zwischen den beiden Halteelementen 12.1 und 14.1 gehalten sein. Das Halteelement 14.1 kann an dem Verbindungselement 14.2 befestigt sein. Bevorzugt ist das Halteelement 14.1 mit dem Verbindungselement 14.2 verschraubt. Das Halteelement 14.1 kann auf einer Oberseite des Verbindungselements 14.2 aufliegen.

Das Verbindungselement 14.2 kann das Halteelement 14.1 mit der Welle 18 verbinden. Das Verbindungselement 14.2 kann das Halteelement 14.1 tragen. Das Verbindungselement 14.2 kann an der Welle 18 befestigt sein, z. B. von unten. Beispielsweise kann das Verbindungselement 14.2 mittels eines Befestigungselements 32 drehfest an der Welle 18 befestigt sein.

Bevorzugt ist das Befestigungselement 32 eine Schraube. Das Befestigungselement 32 kann sich durch ein Durchgangsloch des Verbindungselements 14.2 in ein Befestigungsloch der Welle 18 erstrecken. Das Befestigungsloch kann beispielsweise als ein Sack- oder Durchgangsloch ausgeführt sein. Vorzugsweise kann das Befestigungselement 32 in das Befestigungsloch eingeschraubt sein. Das Befestigungsloch kann sich bevorzugt in einer Stirnfläche bzw. Endfläche der Welle 18 öffnen. Das Befestigungsloch kann sich bevorzugt entlang einer Längsachse der Welle 18 erstrecken.

Vorzugsweise kann zwischen dem Verbindungselement 14.2 und dem Befestigungselement 32 eine Dichtung, z. B. in Form eines Dichtrings, angeordnet sein. Die Dichtung kann koaxial zum Befestigungselement 32 und/oder zum Durchgangsloch des Verbindungselements 14.2 angeordnet sein. Die Dichtung kann zwischen dem Befestigungselement 32 und dem Klammerarm 14, vorzugsweise dem Verbindungselement 14.2 davon, abdichten. Bevorzugt kann die Dichtung zwischen dem Verbindungselement 14.2, vorzugsweise einer Unterseite davon, und einem Schraubenkopf des Befestigungselements 32 angeordnet sein. Bevorzugt ist die Dichtung als ein O-Ring ausgeführt.

Die Welle 16 ist zum Schwenken des Klammerarms 12 mit dem Klammerarm 12 verbunden. Eine Drehung der Welle 16 kann ein Verschwenken des Klammerarms 12 bewirken. Bevorzugt kann eine Längssachse der Welle 16 eine Schwenkachse des Klammerarms 12 sein. Der Klammerarm 12 kann um die Schwenkachse schwenkbar sein. Die Schwenkachse bzw. die Längsachse kann im Wesentlichen vertikal ausgerichtet sein.

Die (weitere) Welle 18 kann zum Schwenken des Klammerarms 14 mit dem Klammerarm 14 verbunden sein. Eine Drehung der Welle 18 kann ein Verschwenken des Klammerarms 14 bewirken. Bevorzugt kann eine Längssachse der Welle 18 eine Schwenkachse des Klammerarms 14 sein. Der Klammerarm 14 kann um die Schwenkachse schwenkbar sein. Die Schwenkachse bzw. die Längsachse kann im Wesentlichen vertikal ausgerichtet sein. Die Wellen 16 und 18 können parallel zueinander verlaufen.

Wie bereits erwähnt, ist es in anderen Ausführungsformen ebenfalls möglich, dass lediglich der schwenkbare Klammerarm 12 und entsprechend die Welle 16 umfasst ist, nicht aber der schwenkbare Klammerarm 14 und entsprechend die Welle 18.

Eine Drehung der Welle 16 und optional der Welle 18 kann von einer Betätigungseinrichtung 34 der Klammervorrichtung 10 bewirkt sein. Die Betätigungseinrichtung 34 kann auf jegliche Weise ausgeführt sein. Vorzugsweise ist die Betätigungseinrichtung 34 auf einer dem Klammerarm 12 und 14 entgegengesetzten Seite des Montageelements 20 angeordnet.

Bevorzugt weist die Betätigungseinrichtung 34 eine Hubstange 36 und einen Getriebemechanismus 38 auf. Der Getriebemechanismus 38 kann die Hubstange 36 mit der Welle 16 und optional der Welle 18 trieblich verbinden. Eine Vertikalbewegung der Hubstange 36 kann von dem Getriebemechanismus 38 in eine Drehbewegung der Welle 16 und optional der Welle 18 umgeformt werden, wodurch sich letztlich der Klammerarm 12 und optional der Klammerarm 14 schwenken lässt.

Besonders bevorzugt weist die Betätigungseinrichtung 34 noch eine Aufhängung 40 auf. Mittels der Aufhängung 40 kann die Betätigungseinrichtung 34 und damit die Klammervorrichtung 10 aufgehängt werden. Die Aufhängung 40 kann bspw. an einem oberen Ende der Klammervorrichtung 10 angeordnet sein. Die Aufhängung 40 kann eine Schnappverschluss-Konfiguration aufweisen. Bevorzugt kann die Aufhängung 40 eine Wirkverbindung zwischen der Hubstange 36 und einem weiteren Teil der Betätigungseinrichtung 34, der nicht in der Klammervorrichtung 10 umfasst ist, herstellen. Bevorzugt kann dieser weitere Teil eine, vorzugsweise umlaufende Steuerkurve (z. B. Hubkurve) und ein Führungselement (z. B. eine Rolle), das an der Steuerkurve geführt ist, aufweisen.

Das Montageelement 20 ist bevorzugt plattenförmig. Vorzugsweise kann das Montageelement 20 als eine Montageplatte ausgeführt sein. Das Montageelement 20 kann die Klammervorrichtung 10 an einem bewegbaren Förderabschnitt (nicht dargestellt) anbringen, vorzugsweise mittels einer Schraubverbindung. Beispielsweise kann das Montageelement 20 die Klammervorrichtung 10 an einem drehbaren Teil eines Behältertransportkarussells oder eines Behälterbehandlungskarussells, vorzugsweise Verschließerkarussells, anbringen. Bevorzugt kann das Montageelement 20 von unten an dem bewegbaren Förderabschnitt, z. B. den drehbaren Teil, montiert werden. Das Montageelement 20 kann mittels einer Überkopf-Montage an einem Träger der Behältertransport- und/oder Behälterbehandlungsvorrichtung montiert werden.

Das Montageelement 20 kann einen sogenannten Grauraum von einem Reinraum trennen. Der Reinraum ist auf einer Seite des Montageelements 20 angeordnet. Der Grauraum ist auf einer entgegengesetzten Seite des Montageelements 20 angeordnet. Bevorzugt ist der Reinraum unterhalb von dem Montageelement 20 und der Grauraum oberhalb von dem Montageelement 20 angeordnet. Im Reinraum kann der Behälter B getragen sein. Entsprechend kann der Klammerarm 12 und gegebenenfalls der Klammerarm 14 in dem Reinraum angeordnet sein. Andererseits können die Betätigungseinrichtung 34 und die Aufhängung 40 in dem Grauraum angeordnet sein.

Das Montageelement 20 weist mindestens eine Wellendurchführung 42 auf, wie in Figur 2 dargestellt ist. Bevorzugt weist das Montageelement 20 je Welle 16, 18 eine Wellendurchführung 42 auf. Die Wellendurchführung 42 kann bspw. als ein Gleitlager (z. B. Gleitlagerring) oder eine Hülse ausgeführt sein. Die Wellendurchführung 42 kann in einem Durchgangsloch 44 des Montageelements 20 angeordnet sein. Das Durchgangsloch 44 kann sich von einer Oberseite oder Grauraumseite des Montageelements 20 zu einer Unterseite oder Reinraumseite des Montageelements 20 erstrecken. Es ist auch möglich, dass ein Durchgangsloch (z. B. das Durchgangsloch 44) des Montageelements 20 selbst die Wellendurchführung 42 darstellt oder die Wellendurchführung auf eine andere Weise realisiert ist. Die Welle 16 kann sich durch die Wellendurchführung 42 erstrecken. Die Welle 18 kann sich durch eine weitere Wellendurchführung des Montageelements 20 erstrecken, vorzugsweise parallel zur Wellendurchführung 42 bzw. zum Durchgangsloch 44 (nicht in Figur 2 dargestellt).

Das Dichtelement 22 ist koaxial zu der Welle 16 angeordnet. Das Dichtelement 22 dichtet zwischen der Welle 16 und dem Montageelement 20 ab. Das Dichtelement 22 kann vertikal ausgerichtet sein.

Bevorzugt ist das Dichtelement 22 und/oder 24 schlauchförmig bzw. röhrenförmig ist. Bevorzugt ist das Dichtelement 22 und/oder 24 als ein Torsionsbalg ausgeführt. Das Dichtelement 22 und/oder 24 kann elastisch verformbar, vorzugsweise in sich verdrehbar und/oder axial dehnbar, sein. Beispielsweise kann das Dichtelement 22 und/oder 24 aus einem Elastomer hergestellt sein. Bevorzugt kann das Dichtelement 22 und/oder 24 aus Ethylen-Propylen-Dien-Kautschuk (EPDM), Silikon oder Fluorkautschuk (FKM) hergestellt sein.

Das Dichtelement 22 kann ein erstes Ende 46 und zweites Ende 48 aufweisen. Das zweite Ende 48 kann entgegengesetzt zu dem ersten Ende 46 ausgerichtet sein. Die Enden 46, 48 sind bevorzugt Stirnenden des Dichtelements 22. Bevorzugt ist das erste Ende 46 ein oberes Ende des Dichtelements 22, und das zweite Ende 48 ist ein unteres Ende des Dichtelements 22.

Das erste Ende 46 kann drehfest mit dem Montageelement 20 und/oder der Wellendurchführung 42 verbunden sein. Beispielsweise ist das erste Ende 46 an das Montageelement 20 und/oder die Wellendurchführung 42 geklemmt. Bevorzugt ist das erste Ende 46 zwischen der Wellendurchführung 42 und dem Durchgangsloch 44 eingeklemmt.

Im Einzelnen kann das Dichtelement 22 einen Kragenabschnitt 50 aufweisen. Der Kragenabschnitt 50 kann an dem ersten Ende 46 angeordnet ein. Der Kragenabschnitt 50 kann bevorzugt ein umlaufender und/oder ein radial nach innen gerichteter Kragenabschnitt sein. Der Kragenabschnitt 50 kann zwischen der Wellendurchführung 42 und dem Durchgangsloch 44 eingeklemmt sein. Beispielsweise kann der Kragenabschnitt 50 in einer Außenumfangsnut der Wellendurchführung 42 aufgenommen sein.

Das zweite Ende 48 kann drehfest mit der Welle 16 und/oder dem Klammerarm 12, vorzugsweise dem Verbindungselement 12.2 davon, verbunden sein. Beispielsweise ist das zweite Ende 48 an die Welle 16 und/oder den Klammerarm 12, vorzugsweise das Verbindungselement 12.2, geklemmt. Bevorzugt ist das zweite Ende 48 zwischen der Welle 16 und dem Klammerarm 12 (z. B. dem Verbindungselement 12.2) eingeklemmt.

Im Einzelnen kann das Dichtelement 22 einen Kragenabschnitt 52 aufweisen. Der Kragenabschnitt 52 kann an dem zweiten Ende 48 angeordnet ein. Der Kragenabschnitt 52 kann bevorzugt ein umlaufender und/oder ein radial nach innen gerichteter Kragenabschnitt sein. Der Kragenabschnitt 52 kann zwischen der Welle 16 und dem Klammerarm 12 (z. B. dem Verbindungselement 12.2) eingeklemmt sein. Beispielsweise kann der Kragenabschnitt 52 in einer Außenumfangsnut oder einem Absatz der Welle 16 aufgenommen sein. Bevorzugt kann der Kragenabschnitt 52 zwischen einer Seitenfläche der Außenumfangsnut oder dem Absatz der Welle 16 einerseits und einer Oberseite des Klammerarms 12 (z. B. des Verbindungselements 12.2) eingeklemmt sein.

Bevorzugt kann sich das Dichtelement 22 bei einer Drehung der Welle 16, vorzugsweise um 10°, 15° oder 20°, unter Beibehaltung einer Dichtwirkung zwischen dem Montageelement 20 und der Welle 16 in sich elastisch verformend verdrehen. Dies kann beispielsweise durch die zweiseitige Einspannung des Dichtelements 22 am ersten Ende 46 und am zweiten Ende 48 bewirkt sein.

Das (weitere) Dichtelement 24 kann koaxial zu der Welle 18 angeordnet sein. Das Dichtelement 24 kann zwischen der Welle 18 und dem Montageelement 20 abdichten. Das Dichtelement 24 kann vertikal ausgerichtet sein. Vorzugsweise kann das Dichtelement 24 wie das Dichtelement 22 ausgeführt sein.

Das Dichtelement 24 kann ein erstes Ende und zweites Ende aufweisen. Das zweite Ende kann entgegengesetzt zu dem ersten Ende ausgerichtet sein. Die Enden sind bevorzugt Stirnenden des Dichtelements 24. Bevorzugt ist das erste Ende ein oberes Ende des Dichtelements 24, und das zweite Ende ist ein unteres Ende des Dichtelements 24.

Das erste Ende des Dichtelements 24 kann drehfest mit dem Montageelement 20 und/oder der Wellendurchführung für die Welle 18 verbunden sein. Beispielsweise ist das erste Ende des Dichtelements 24 an das Montageelement 20 und/oder die Wellendurchführung für die Welle 18 geklemmt. Bevorzugt ist das erste Ende des Dichtelements 24 zwischen der Wellendurchführung für die Welle 18 und einem Durchgangsloch des Montageelements 20 eingeklemmt.

Im Einzelnen kann das Dichtelement 24 einen Kragenabschnitt aufweisen. Der Kragenabschnitt kann an dem ersten Ende des Dichtelements 24 angeordnet ein. Der Kragenabschnitt kann bevorzugt ein umlaufender und/oder ein radial nach innen gerichteter Kragenabschnitt sein. Der Kragenabschnitt kann zwischen der Wellendurchführung für die Welle 18 und einem Durchgangsloch des Montageelements 20 eingeklemmt sein. Beispielsweise kann der Kragenabschnitt in einer Außenumfangsnut der Wellendurchführung für die Welle 18 aufgenommen sein.

Das zweite Ende des Dichtelements 24 kann drehfest mit der Welle 18 und/oder dem Klammerarm 14, vorzugsweise dem Verbindungselement 14.2 davon, verbunden sein. Beispielsweise ist das zweite Ende des Dichtelements 24 an die Welle 18 und/oder den Klammerarm 14, vorzugsweise das Verbindungselement 14.2, geklemmt. Bevorzugt ist das zweite Ende des Dichtelements 24 zwischen der Welle 18 und dem Klammerarm 14 (z. B. dem Verbindungselement 14.2) eingeklemmt.

Im Einzelnen kann das Dichtelement 24 einen (weiteren) Kragenabschnitt aufweisen. Der Kragenabschnitt kann an dem zweiten Ende des Dichtelements 24 angeordnet ein. Der Kragenabschnitt kann bevorzugt ein umlaufender und/oder ein radial nach innen gerichteter Kragenabschnitt sein. Der Kragenabschnitt kann zwischen der Welle 18 und dem Klammerarm 14 (z. B. dem Verbindungselement 14.2) eingeklemmt sein. Beispielsweise kann der Kragenabschnitt in einer Außenumfangsnut oder einem Absatz der Welle 18 aufgenommen sein. Bevorzugt kann der Kragenabschnitt 52 zwischen einer Seitenfläche der Außenumfangsnut oder dem Absatz der Welle 18 einerseits und einer Oberseite des Klammerarms 14 (z. B. des Verbindungselements 14.2) eingeklemmt sein.

Bevorzugt kann sich das Dichtelement 24 bei einer Drehung der Welle 18, vorzugsweise um 10°, 15° oder 20°, unter Beibehaltung einer Dichtwirkung zwischen dem Montageelement 20 und der Welle 18 in sich elastisch verformend verdrehen. Dies kann beispielsweise durch die zweiseitige Einspannung des Dichtelements 24 an dessen ersten und zweiten Ende bewirkt sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Klammerarms, der Welle, des Montageelements und/oder des Dichtelements des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- B: Behälter
- 10: Klammervorrichtung
- 12: Klammerarm
- 12.1: Halteelement
- 12.2: Verbindungselement
- 14: Klammerarm
- 14.1: Halteelement
- 14.2: Verbindungselement
- 16: Welle
- 18: Welle
- 20: Montageelement
- 22: Dichtelement
- 24: Dichtelement
- 26: Befestigungselement
- 28: Befestigungsloch
- 30: Dichtung
- 32: Befestigungselement
- 34: Betätigungseinrichtung
- 36: Hubstange
- 38: Getriebemechanismus
- 40: Aufhängung
- 42: Wellendurchführung
- 44: Durchgangsloch
- 46: erstes Ende
- 48: zweites Ende
- 50: Kragenabschnitt
- 52: Kragenabschnitt

## Patentansprüche

1. Klammervorrichtung (10), vorzugsweise Neckhandling-Klammervorrichtung, zum Halten von Behältern (B) für eine Behältertransport- und/oder Behälterbehandlungsvorrichtung, aufweisend:
einen Klammerarm (12) zum Halten eines Behälters (B);
eine Welle (16), die zum Schwenken des Klammerarms (12) mit dem Klammerarm (12) verbunden ist;
ein, vorzugsweise im Wesentlichen plattenförmiges, Montageelement (20) zum Montieren der Klammervorrichtung (10), wobei das Montageelement (20) eine Wellendurchführung (42) aufweist, durch die sich die Welle (16) erstreckt; und
ein Dichtelement (22), das koaxial zu der Welle (16) angeordnet ist und zwischen der Welle (16) und dem Montageelement (20) abdichtet.

2. Klammervorrichtung (10) nach Anspruch 1, wobei:
das Dichtelement (22) schlauchförmig ist.

3. Klammervorrichtung (10) nach Anspruch 1 oder Anspruch 2, wobei:
das Dichtelement (22) ein erstes Ende (46) und zweites Ende (48), das dem ersten Ende (46) entgegengesetzt ist, aufweist;
das erste Ende (46) drehfest mit dem Montageelement (20) und/oder der Wellendurchführung (42) verbunden ist; und
das zweite Ende (48) drehfest mit der Welle (16) und/oder dem Klammerarm (12) verbunden ist.

4. Klammervorrichtung (10) nach einem der vorherigen Ansprüche, wobei:
das Dichtelement (22) einerseits an das Montageelement (20) und/oder die Wellendurchführung (42) und andererseits an die Welle (16) und/oder den Klammerarm (12) geklemmt ist.

5. Klammervorrichtung (10) nach einem der vorherigen Ansprüche, wobei:
das Dichtelement (22) einen, vorzugsweise radial nach innen gerichteten, Kragenabschnitt (50) aufweist, der zwischen der Wellendurchführung (42) und einem Durchgangsloch (44) des Montageelements (20) eingeklemmt ist; und/oder
das Dichtelement (22) einen, vorzugsweise radial nach innen gerichteten, Kragenabschnitt (52) aufweist, der zwischen dem Klammerarm (12) und der Welle (16) eingeklemmt ist.

6. Klammervorrichtung (10) nach einem der vorherigen Ansprüche, wobei:
das Dichtelement (22) elastisch verformbar, vorzugsweise in sich verdrehbar und/oder axial dehnbar, ist; und/oder
das Dichtelement (22) als ein Torsionsbalg ausgeführt ist; und/oder
das Dichtelement (22) aus einem Elastomer, Ethylen-Propylen-Dien-Kautschuk, Silikon oder Fluorkautschuk hergestellt ist.

7. Klammervorrichtung (10) nach einem der vorherigen Ansprüche, wobei:
sich das Dichtelement (22) bei einer Drehung der Welle (16), vorzugsweise um 10°, 15° oder 20°, unter Beibehaltung einer Dichtwirkung zwischen dem Montageelement (20) und der Welle (16) in sich elastisch verdreht.

8. Klammervorrichtung (10) nach einem der vorherigen Ansprüche, wobei:
das Montageelement (20) als eine Platte, vorzugsweise eine Montageplatte, ausgeführt ist, vorzugsweise zur Überkopf-Montage an einen Träger der Behältertransportund/oder Behälterbehandlungsvorrichtung, besonders bevorzugt mittels einer Schraubverbindung; und/oder
die Wellendurchführung (42) als ein Gleitlager oder eine Hülse ausgeführt ist.

9. Klammervorrichtung (10) nach einem der vorherigen Ansprüche, ferner aufweisend:
eine Betätigungseinrichtung (34) zum Drehen der Welle (16) zum Schwenken des Klammerarms (12), wobei die Betätigungseinrichtung (34) auf einer dem Klammerarm (12) entgegengesetzten Seite des Montageelements (20) angeordnet ist; und/oder
eine Aufhängung (40) zum Aufhängen der Klammervorrichtung (10), wobei die Aufhängung (40) auf einer dem Klammerarm (12) entgegengesetzten Seite des Montageelements (20) angeordnet ist.

10. Klammervorrichtung (10) nach einem der vorherigen Ansprüche, ferner aufweisend:
ein Befestigungselement (32), vorzugsweise eine Schraube, das den Klammerarm (12) drehfest an der Welle (16) befestigt, vorzugsweise durch Einschrauben in ein stirnseitiges Befestigungsloch (28) der Welle (16), und optional
eine Dichtung (30), vorzugsweise einen Dichtring, die zwischen dem Befestigungselement (32) und dem Klammerarm (12) abdichtet.

11. Klammervorrichtung (10) nach einem der vorherigen Ansprüche, wobei:
der Klammerarm (12) ein Verbindungselement (12.2), das drehfest an der Welle (16) befestigt ist, und ein Halteelement (12.1), das an dem Verbindungselement (12.2) befestigt ist, zum Kontaktieren des Behälters (B) aufweist; oder
der Klammerarm (12) einteilig ist.

12. Klammervorrichtung (10) nach einem der vorherigen Ansprüche, ferner aufweisend:
einen weiteren Klammerarm (14) zum Halten des Behälters (B);
eine weitere Welle (18), die zum Schwenken des weiteren Klammerarms (14) mit dem weiteren Klammerarm (14) verbunden ist, wobei das Montageelement (20) eine weitere Wellendurchführung, durch die sich die weitere Welle (18) erstreckt, aufweist; und
ein weiteres Dichtelement (24), das koaxial zu der weiteren Welle (18) angeordnet ist und zwischen der weiteren Welle (18) und dem Montageelement (20) abdichtet.

13. Klammervorrichtung (10) nach Anspruch 12, wobei:
der weitere Klammerarm (14) und der Klammerarm (12) gegensinnig zueinander schwenkbar sind; und/oder
die Welle (16) und die weitere Welle (18) parallel sind.

14. Klammervorrichtung (10) nach Anspruch 12 oder Anspruch 13, wobei mindestens eines der nachfolgenden Merkmale erfüllt ist:
das weitere Dichtelement (24) ist schlauchförmig;
das weitere Dichtelement (24) weist ein erstes Ende und zweites Ende, das dem ersten Ende des weiteren Dichtelements (24) entgegengesetzt ist, auf, das erste Ende des weiteren Dichtelements (24) ist drehfest mit dem Montageelement (20) und/oder der weiteren Wellendurchführung verbunden, und das zweite Ende des weiteren Dichtelements (24) ist drehfest mit der weiteren Welle (18) und/oder dem weiteren Klammerarm (14) verbunden;
das weitere Dichtelement (24) ist einerseits an das Montageelement (20) und/oder die weitere Wellendurchführung und andererseits an die weitere Welle (18) und/oder den weiteren Klammerarm (14) geklemmt;
das weitere Dichtelement (24) weist einen, vorzugsweise radial nach innen gerichteten, Kragenabschnitt auf, der zwischen der weiteren Wellendurchführung und einem Durchgangsloch des Montageelements (20) eingeklemmt ist;
das weitere Dichtelement (24) weist einen, vorzugsweise radial nach innen gerichteten, Kragenabschnitt auf, der zwischen dem weiteren Klammerarm (14) und der weiteren Welle (18) eingeklemmt ist;
das weitere Dichtelement (24) ist elastisch verformbar, vorzugsweise in sich verdrehbar und/oder axial dehnbar;
das weitere Dichtelement (24) ist als ein Torsionsbalg ausgeführt;
das weitere Dichtelement (24) ist aus einem Elastomer, Ethylen-Propylen-Dien-Kautschuk, Silikon oder Fluorkautschuk hergestellt; und
bei einer Drehung der weiteren Welle (18), vorzugsweise um 10°, 15° oder 20°, verdreht sich das weitere Dichtelement (24) unter Beibehaltung einer Dichtwirkung zwischen dem Montageelement (20) und der weiteren Welle (18) in sich elastisch.

15. Behältertransport- und/oder Behälterbehandlungsvorrichtung, vorzugsweise Verschließvorrichtung zum Verschließen von Behältern (B), aufweisend:
mindestens eine Klammervorrichtung (10) nach einem der vorherigen Ansprüche.
